# EUROPEAN PATENT APPLICATION

(11) **EP 1 659 204 A1**
(43) Date of publication of application: **24.05.2006**
(21) Application number: 05255610.7
(22) Date of filing: 14.09.2005
(51) Int. Cl.: D06F 37/30, D06F 37/26

(54) **Washing machine**

(30) Priority: 17.11.2004 KR 2004094350
(71) Applicant: Samsung Electronics Co., Ltd., Suwon-si, Gyeonggi-Do (KR)
(72) Inventor: Namkung, Koan Seog, Taean-Eub Hwasung-si Gyeonggi-do (KR); Kang, Myung Sun, Yeongtong-Gu Suwon-Si Gyeonggi-do (KR)
(74) Representative: Davies, Robert Ean

(57) **Abstract**

A washing machine having simplified structure for coupling a bearing housing (20) with a stator (31) and manufactured by a low-cost, simplified process is provided. The washing machine includes a water tub (11), a rotation tub (12) installed in the water tub (11), a rotation shaft (18) penetrating the rotation tub (12) and the water tub (11) and extended to the outside of the water tub, a bearing housing (20) installed in the water tub and supporting the rotation shaft, a driving motor (30), mounted to the outside of the water tub (11), for rotating the rotation shaft (18), the driving motor (30) including a stator (31) fixed in the bearing housing (20) and a rotor (32) coupled with the rotation shaft (18), pre-coupling protrusions (41) protruded from the water tub (11) such that the center of the stator (31) is aligned with the center of the rotation shaft (18) to pre-couple the stator when mounting the stator to the bearing housing, and pre-coupling holes (42) coupled with the pre-coupling protrusions (41) and formed in the stator (31).

## Description

The present invention relates to a washing machine and, more particularly, but not exclusively, to a washing machine having an improved structure for mounting a bearing housing and a stator of a motor, which are installed in a water tub.

Generally, washing machines rotate a rotation tub or a pulsator to wash laundry using rotation force of a driving motor, and rotate the rotation tub at high speed to dehydrate the laundry. In the washing machine, the driving motor may be connected to a shaft of the rotation tub via a power transmitting device, such as pulleys, belts, or the like, or a direct-coupled driving motor, in which a stator is fixed in a water tub and a stator of the driving motor is directly coupled with a rotation shaft of the washing machine, may be employed.

U.S. Patent No. 6,510,716 discloses a washing machine employing the direct-coupled driving motor. The washing machine of the patent includes a bearing housing installed at a rear side of a water tub to support a rotation shaft, a stator installed in the bearing housing and having coils wound thereon, a rotor rotatably installed outside the stator. The bearing housing is coupled to the water tub by fastening screws, the stator is fixed to the bearing housing by a plurality of fastening screws, the rotor is rotated by its central portion coupled with the rotation shaft connected to the rotation tub.

The washing machine of the patent includes a rib protruded from the stator to the bearing housing and having a slope such that the center of the stator is aligned with the center of the bearing housing when coupling the stator with the bearing housing, and a recess corresponding to the rib and formed in the bearing housing.

However, since the washing machine has a structure in that the rib and the recess are respectively formed in the stator and the bearing housing by separate manufacturing processes such that the center of the stator is aligned with the center of the bearing housing and the bearing housing is coupled with the water tub by the fastening screws, there are shortcomings such as a large number of parts, a complex manufacturing process, and high manufacturing costs.

Illustrative, non-limiting embodiments of the present invention overcome or at least address the above disadvantages and other disadvantages not described above.

Embodiments of the present invention have been made in view of the above-mentioned problems, and an aim of embodiments of the invention is to provide a washing machine having a simplified structure for coupling a bearing housing with a stator and manufactured by a less complex process at a lower cost.

In accordance with an aspect, the present invention provides a washing machine including a water tub, a rotation tub installed in the water tub, a rotation shaft extended from the water tub and to the outside of the water tub, a bearing housing installed to the water tub to support the rotation shaft, a driving motor mounted to the outside of the water tub for rotating the rotation shaft, the driving motor having a stator fixed in the bearing housing and a rotor coupled with the rotation shaft, pre-coupling protrusions protruded from the water tub such that the center of the stator is aligned with the center of the rotation shaft to pre-couple the stator when mounting the stator to the bearing housing, and pre-coupling holes formed in the stator to be coupled with the pre-coupling protrusions.

The washing machine may further include coupling recesses formed in the outer circumference of the bearing housing to be coupled with the water tub, and coupling steps inserted into the coupling recesses to couple the bearing housing with the water tub, wherein the pre-coupling protrusions are protruded from the coupling steps.

The outer circumference of the bearing housing is embedded in the water tub such that the bearing housing is fixed to the water tub when manufacturing the water tub by insert moulding, and the coupling steps and the pre-coupling protrusions are integrally formed with the water tub when manufacturing the water tub.

The pre-coupling protrusions are protruded from the positions of the water tub adjacent to the circumference of the bearing housing, the outer circumference of the bearing housing is embedded into the water tub such that the bearing housing is fixed to the water tub when manufacturing the water tub by insert moulding, and the pre-coupling protrusions are integrally formed with the water tub when manufacturing the water tub.

The stator is fixed to the bearing housing by fixing bolts after coupling the pre-coupling protrusions with the pre-coupling holes.

Additional aspects and/or advantages of the invention will be set forth in part in the description which follows and, in part, will be apparent from the description, or may be learned by practice of the invention.

For a better understanding of the invention, and to show how embodiments of the same may be carried into effect, reference will now be made, by way of example, to the accompanying diagrammatic drawings in which:
FIG. 1 is a sectional view illustrating the structure of a washing machine consistent with an exemplary embodiment of the present invention;
FIG. 2 is an exploded perspective view illustrating a driving motor of the washing machine consistent with an exemplary embodiment of the present invention;
FIG. 3 is an exploded perspective view illustrating a stator mounting structure of the driving motor of the washing machine consistent with an exemplary embodiment of the present invention;
FIG. 4 is a sectional view illustrating the driving motor and the stator mounting structure of the washing machine consistent with an exemplary embodiment of the present invention;
FIG. 5 is a sectional view illustrating the stator mounting structure of the washing machine consistent with an exemplary embodiment of the present invention separated from the driving motor;
FIG. 6 is an exploded perspective view illustrating a stator mounting structure of the driving motor of the washing machine according to another exemplary embodiment of the present invention; and
FIG. 7 is a sectional view illustrating the driving motor and the stator mounting structure of the washing machine according to another exemplary embodiment of the present invention.

Hereinafter the illustrative, non-limiting embodiments of the present invention will be described in detail with reference to the accompanying drawings.

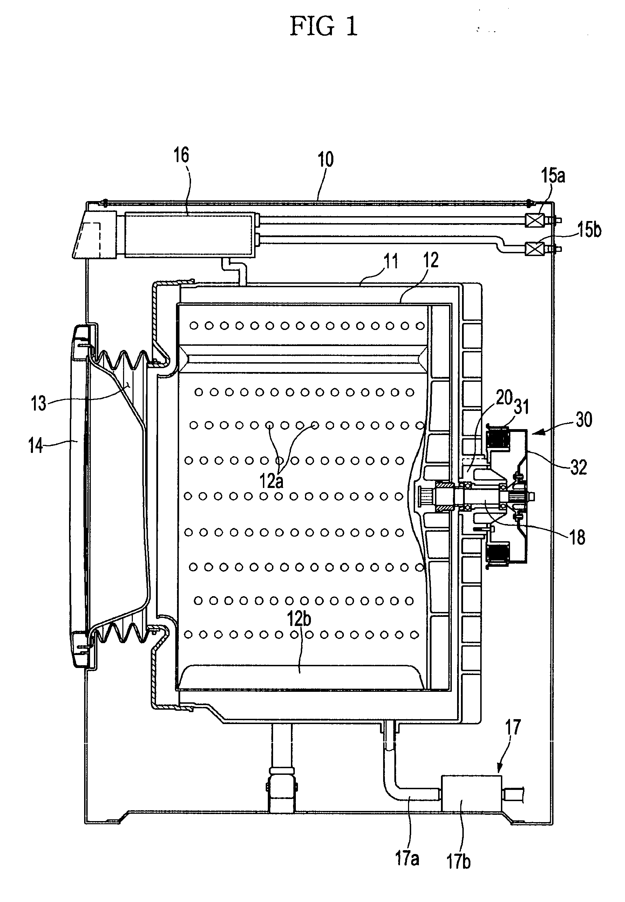

The washing machine according to an exemplary embodiment of the present invention, as shown in FIG. 1, includes a drum-shaped water tub 11 installed in a main body 10 and storing washing water, and a rotation tub 12 rotatably installed in the drum-shaped water tub 11, and is a drum type washing machine.

The main body 10 has an open inlet 13 formed in the front side of the main body 10, through which laundry is inserted into the rotation tub 12, and a door 14 for opening and closing the open inlet 13 is installed to the open inlet 13. Water supply valves 15a and 15b for supplying water and a detergent supply 16 for supplying detergent into the water tub 11 are installed at the upper side of the water tub 11, and a drain device 17 including a drain pipe 17a and a drain pump 17b, for draining the water from the water tub 11, is installed at the lower side of the water tub 11.

The rear side of the water tub 11 rotatably supports a rotation shaft 18 coupled to the rear center of the rotation tub 12 such that the rotation tub 12 can be rotated in the water tub 11. The rotation tub 12 has a plurality of penetrating holes 12a formed in the circumference of the rotation tub 12 such that the washing water can be introduced and discharged. The rotation tub 12 also includes a plurality of lifters 12b installed on the inner surface of the rotation tub 12 such that the laundry can be raised and dropped when the rotation tub 12 rotates.

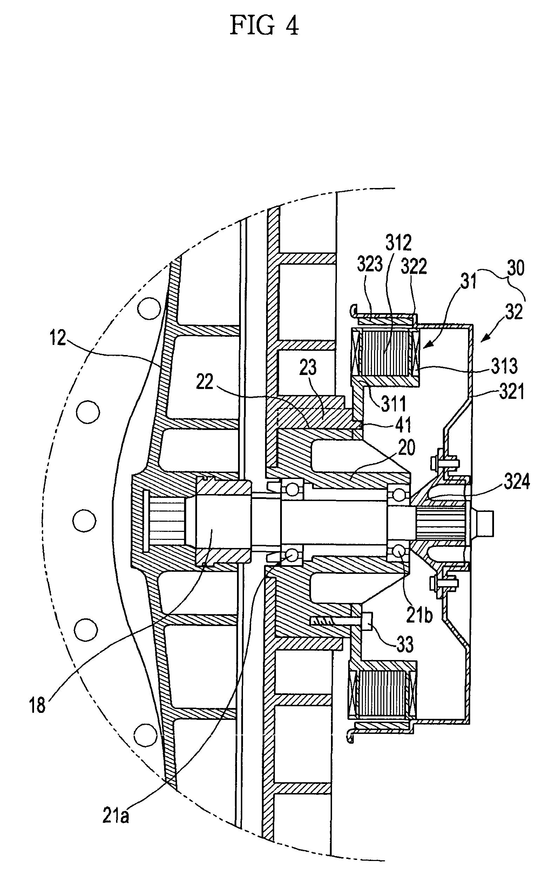

The rotation shaft 18 for supporting the rotation tub 12, as shown in Fig. 4, penetrates the rear side of the water tub 11 and extends rearward of the water tub 11, and a driving motor for rotating the rotation shaft 18 is mounted to the rear side of the water tub 11. A cylindrical bearing housing 20 is installed to the rear side of the water tub 11 to rotatably support the rotation shaft 18, and bearings 21a and 21b are installed between the bearing housing 20 and the outer surface of the rotation shaft 18 to be spaced apart from each other such that the rotation shaft 18 coupled with the rotation tub 12 is firmly supported when rotating.

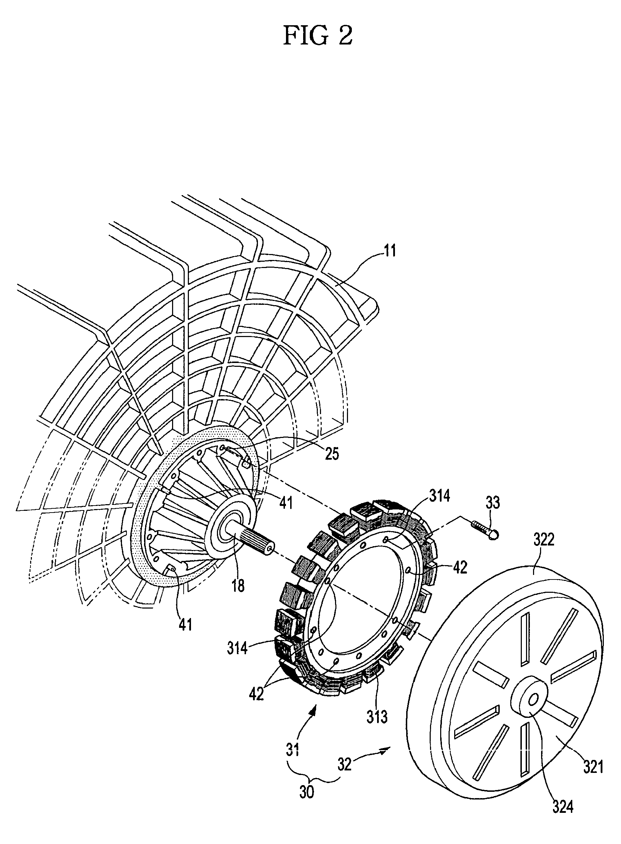

The water tub 11 is manufactured by injection moulding of resin, and the bearing housing 20, as shown in Figs. 2 to 4, is inserted into the water tub 11 when the water tub 11 is injection-moulded. The bearing housing 20 is formed with a plurality of coupling recesses 22 in the outer circumference thereof such that the bearing housing 20 is firmly coupled with the water tub 11. Due to this structure, the structure of the rear side of the water tub 11 is simplified by inserting the bearing housing 20 into a mould when manufacturing the water tub 11 in comparison with the conventional structure and the outer circumference of the bearing housing 20 is firmly fixed in the water tub 11 by being integrally formed with the water tub 11. Due to the coupling recesses 22 formed in the outer circumference of the bearing housing 20, a plurality of coupling steps 23 are formed by molten resin entering the coupling recesses 22 when manufacturing the water tub 11 such that the bearing housing 20 is firmly coupled with the water tub 11.

The driving motor 30 mounted to the rear side of the water tub 11 includes a stator 31 fixed to the bearing housing at the rear side of the water tub 11 and a rotor 32 rotatably installed to rotate around the outside of the stator 31 and having a center of the rotor 32 coupled with the rotation shaft 18.

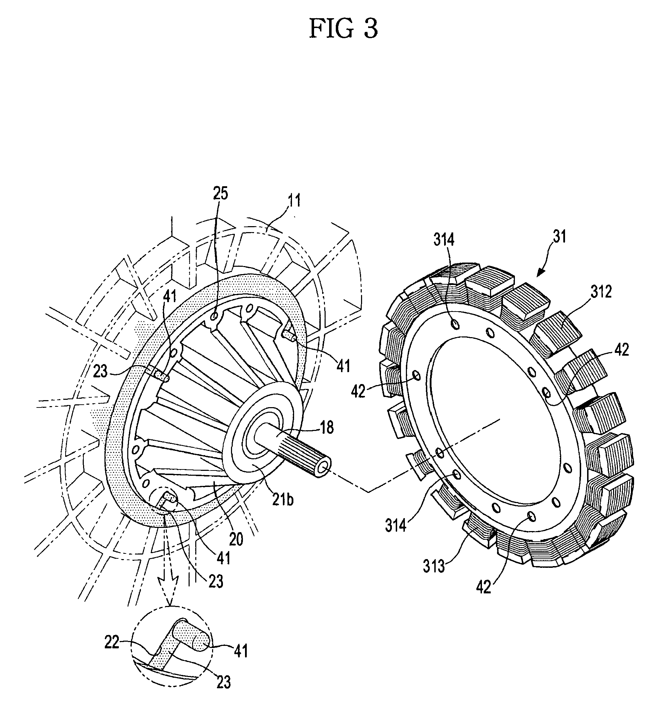

The stator 31, as shown in Fig. 3, includes a ring-shaped stator frame 311 made of insulating material, a core 312 laminated on the outer circumference of the stator frame 311, and an exciting coil 313 wound around the core 312. The stator 31 is fixed to the bearing housing 20 such that the stator frame 311 is fixed to the bearing housing at the rear side of the water tub 11 by a plurality of fixing screws 33. To this coupling, screw fastening holes 25 and 314 for fastening the fixing screws 33 are respectively formed in the inner circumference of the stator frame 311 and the bearing housing 20 to correspond to each other.

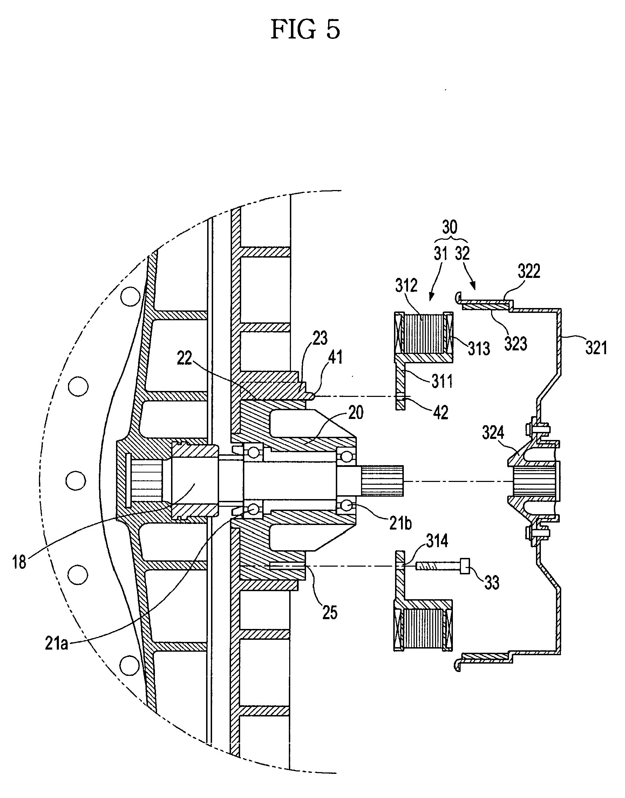

The rotor 32, as shown in Figs. 4 and 5, includes a rotation member having a circular plate 321 coupled with the rotation shaft 18 at the center thereof and a rim 322 provided in the outer circumference of the circular plate 321 and surrounding the outer side of the stator 31, and a plurality of magnets 323 attached to the inner circumference of the rim 322 of the rotation member. A connecting member 324 coupled with the center of the circular plate 321 is coupled with the rotation shaft 18 in serration-coupling fashion such that the rotor 32 is rotated together with the rotation member.

The rotor 32 is rotated by electromagnetic interaction between the stator 31 and the rotor 32 when electric power is applied to the exciting coil 313 of the stator 31. Thus, the driving motor 30 rotates the rotation shaft 18. When the center of the stator 31 is accurately aligned with the center of the rotor 32, the rotor 32 of the driving motor 30 is smoothly rotated.

Thus, the center of the stator 31 must be accurately aligned with the center of the bearing housing 20 and the center of the rotation shaft 18 when the stator 31 is coupled with the bearing housing 20. To achieve this coupling, the washing machine according to an exemplary embodiment of the present invention includes pre-coupling protrusions 41 and pre-coupling holes 42, which are respectively formed to correspond to each other.

The pre-coupling protrusions 41 protrude from the coupling steps 23, which are formed to enter the coupling recesses 22 of the bearing housing 20 when manufacturing the water tub 11, to the stator 31. The pre-coupling holes 42 are formed in the inner circumference of the stator frame 311 of the stator 31 to be coupled with the pre-coupling protrusions 41. Here, the pre-coupling holes 42 may be penetrating holes for penetrating the stator frame 311 or recesses.

Due to this structure, the center of the stator 31 is aligned with the center of the bearing housing 20 by the pre-coupling protrusions 41 and the pre-coupling holes 42 and the fixing screws 33 are fastened when installing the stator to the bearing housing 20, so that the stator 31 is easily installed to an exact position.

By forming the pre-coupling protrusions 41 to the coupling steps 23 formed when manufacturing the water tub 11, the pre-coupling protrusions 41 are formed together with the coupling steps 23 of the water tub 11 without need for an additional process when manufacturing the water tub 11 by insert moulding. Thus, the manufacturing process is simplified and manufacturing costs can be reduced in comparison to the conventional washing machine.

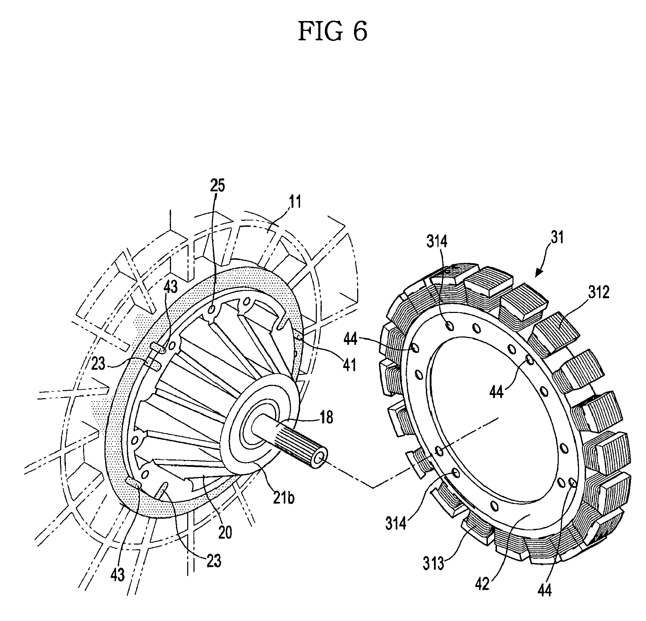

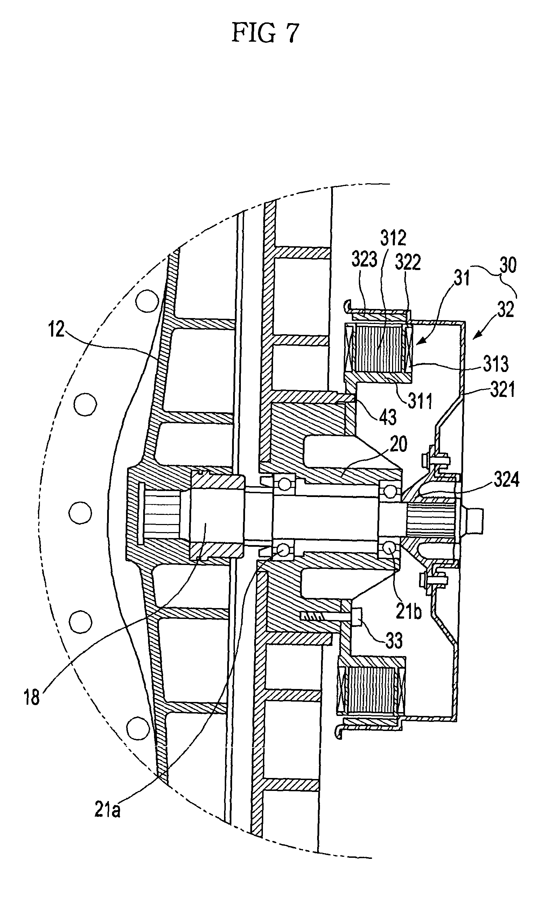

Figs. 6 and 7 illustrate another exemplary embodiment of the pre-coupling protrusions and the pre-coupling holes for installing the stator 31. Different from the above embodiment of the present invention, the pre-coupling protrusions 43 protrude from the position of the water tub 11 (outside position of the bearing housing 20) adjacent to the circumference of the bearing housing 20 and the pre-coupling holes 44 are formed to correspond to the pre-coupling protrusions 43. In this embodiment, the positions of the pre-coupling protrusions 43 and the pre-coupling holes 44 are different from those of the above mentioned embodiment and their effects are substantially the same as those of the above embodiment. In this embodiment, the pre-coupling protrusions 43 are formed together with the water tub 11 when manufacturing the water tub 11 so that manufacturing costs can be reduced and the manufacturing process can also be simplified. Since other components and structures of this embodiment are identical to the above embodiment, their description will be omitted.

Although the embodiments have been described by an example that the bearing housing and the stator mounting structure of the present invention are employed in a drum type washing machine, it will be understood that the bearing housing and the stator mounting structure of the present invention can be applied to a vertical shaft type washing machine (a pulsator type washing machine).

As described above, consistent with embodiments of the present invention, since the pre-coupling protrusions for pre-coupling the stator of the driving motor are formed in the water tub and are integrally formed with the water tub when manufacturing the water tub, the stator mounting structure of embodiments of the present invention is simplified in comparison to the conventional stator mounting structure. Thus, the manufacturing process is simplified and the manufacturing costs are reduced.

Moreover, since the bearing housing is embedded into the water tub when manufacturing the water tub by insert moulding, the structure of embodiments of the present invention is simplified.

Although a few exemplary embodiments of the present invention have been shown and described, it will be appreciated by those skilled in the art that changes may be made in these embodiments without departing from the principles and spirit of the invention, the scope of which is defined in the claims and their equivalents.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A washing machine comprising:
a water tub (11);
a rotation tub (12) installed in the water tub;
a rotation shaft (18) extended from the rotation tub (12) to the outside of the water tub (11);
a bearing housing (20) installed to the water tub (11) to support the rotation shaft (18);
a driving motor (30) mounted to the outside of the water tub (11) operable to rotate the rotation shaft (18), the driving motor including a stator (31) fixed in the bearing housing (20) and a rotor (32) coupled with the rotation shaft (18);
pre-coupling protrusions (41) protruded from the water tub (11) such that the center of the stator (31) is aligned with the center of the rotation shaft (18) to pre-couple the stator (31) when mounting the stator (31) to the bearing housing (20); and
pre-coupling holes (42) formed in the stator (31) to be coupled with the pre-coupling protrusions (41).

2. The washing machine according to claim 1, further comprising:
coupling recesses (22) formed in an outer circumference of the bearing housing (20) to couple the bearing housing (20) with the water tub (11); and
coupling steps (23) inserted into the coupling recesses (22) to couple the bearing housing (20) with the water tub (11), wherein
the pre-coupling protrusions (41) are protruded from the coupling steps (23).

3. The washing machine according to claim 2, wherein the outer circumference of the bearing housing (20) is embedded in the water tub (11) such that the bearing housing (20) is fixed to the water tub (11) when manufacturing the water tub by insert mouldmoulding, and the coupling steps (23) and the pre-coupling protrusions (41) are integrally formed with the water tub (11) when manufacturing the water tub (11).

4. The washing machine according to claim 3, wherein the stator (31) is fixed to the bearing housing (20) by fixing bolts (33) after coupling the pre-coupling protrusions (41) with the pre-coupling holes (42).

5. The washing machine according to any preceding claim, wherein the pre-coupling protrusions (41) are protruded from the positions of the water tub (11) adjacent to the circumference of the bearing housing (20).

6. The washing machine according to claim 5, wherein the outer circumference of the bearing housing (20) is embedded into the water tub (11) such that the bearing housing (20) is fixed to the water tub (11) when manufacturing the water tub by insert mouldmoulding, and the pre-coupling protrusions (41) are integrally formed with the water tub (11) when manufacturing the water tub.

7. The washing machine according to claim 6, wherein the stator (31)is fixed to the bearing housing (20) by fixing bolts (33) after coupling the pre-coupling protrusions (41) with the pre-coupling holes (42).
